# EUROPEAN PATENT APPLICATION

(11) **EP 2 225 956 A1**
(43) Date of publication of application: **08.09.2010**
(21) Application number: 10000760.8
(22) Date of filing: 26.01.2010
(51) Int. Cl.: A23K 1/16

(54) **Gel food compositions**

(30) Priority: 20.02.2009 US 208126 P
(71) Applicant: Nestec S.A., 1800 Vevey (CH)
(72) Inventor: Deganutti, Mario, 33100 Udine (IT); Masó, Maria Elena Velasco, 08195 St. Cugat del Valles Barcelona (ES); Hammer, Dieter Eugen, 53894 Mechernich (DE); Pezzetta, Sara, 33010 Treppo Grande Udine (IT); Van den Elshout, Han, 4927RC Hooge Zwaluwe (NL); Varenna, Luca, 23100 Sondrio (IT); Volpe, Federico, 33010 Tavagnacco (IT)
(74) Representative: Lock, Graham James

(57) **Abstract**

The invention provides gel matrices comprising from about 70% to about 90% of one or more syrups, from about 3% to about 6% of one or more polyols, and from about 1% to about 6% of one or more gelling agents and gel food compositions comprising from about 10% to about 90% of a gel matrix of the invention and from about 90 to about 10% of one or more comestible ingredients suitable for consumption by animals. The products are soft, transparent, non-sticky, solid gel products that have an appealing and desirable appearance to an animal, can be varied in content to retain the interest of an animal consuming the composition, and can be varied in content to provide supplemental nutrients to an animal.

## Description

### CROSS REFERENCE TO RELATED APPLICATIONS

This application claims priority to U.S. Provisional Application Serial No. 61/208126 filed February 20, 2009, the disclosure of which is incorporated herein by this reference.

### BACKGROUND OF THE INVENTION

### Field of the Invention

The invention relates generally to food compositions and particularly to gel matrices and gel food compositions suitable for consumption by animals such as avians and small mammals.

### Description of Related Art

Various illnesses in animals such as avians and small mammals are due to inadequate or poor diets that result in improper nutrition, i.e., under-nutrition or over-nutrition. In the wild, animals tend to eat a full and varied diet selected from meats, grains, fruits, vegetables, sprouts, soil, mineral deposits, fish, and the like. These animals appear to possess an innate knowledge of how to select the appropriate food sources available to ensure a balanced diet. However, domesticated animals usually lack the luxury of choosing from a variety of natural dietary foodstuffs since they are typically fed by their caregivers. In many situations, these domesticated animals are not fed a balanced diet. This is particularly true for avians such as canaries, budgies, and parakeets and for small animals such as hamsters, guinea pigs, and rabbits. It may also be true from many other animals such as dogs, cats, horses, and the like. Often, owners of such domesticated animals feed the animals a diet consisting solely of processed foods or a single natural food such as seeds or vegetables. However, a balanced diet must contain a combination of the necessary nutrients to meet the nutritional requirements of the animals.

Consequently, many modem commercially available animal foods require further supplementation if the animals consuming the foods are to get a balanced diet. One method for supplementing the diet is by providing nutritional treats and snacks. However, supplementary nutritional snacks, treats, and similar food products for such animals tend to be in the form of hard and/or dry products that are not always appealing to the animal, *e.g.,* biscuits. Such products have little, if any, variation in the texture, consistency, or palatability. Several such food products are known in the art. For example, US7291354 discloses methods for forming a food product comprising placing a puffed grain in a blending container, placing a fluidized nutrient in the blending container, blending the puffed grain and the fluidized nutrient to form a puffed product, and dehydrating the puffed product to form a de-puffed food product. US2004037918A1 discloses an extruded bird food product made from a mixture containing grains, seeds, nuts and fresh fruits and vegetables. US2005126503A1 discloses a liquid nectar concentrate composition for preparing a liquid bird food or nectar comprising a solution of sucrose, potassium sorbate and optionally FD&C Red Dye #40. WO02067693A1 discloses a composition for feeding rabbits comprising a base made from a liquid or solid foodstuff and other compounds.

Unfortunately, this lack of variation and appeal often causes animals to lose interest in the food products and therefore not get the supplemental nutrition and intended benefits from consuming the products. There is, therefore a need for new food products suitable for animals such as avians and small animals that are desirable and that provide supplemental nutrients that promote a balanced diet for the animals.

### SUMMARY OF THE INVENTION

It is, therefore, an object of the present invention to provide food products that are appealing to animals.

It is another object of the invention to provide food products that provide nutrition to animals.

It is another object of the invention to provide food products that promote a balanced diet for animals.

It is a further object of the invention to provide a variety of food products having different ingredients.

One or more of these or other objects are achieved using novel gel matrices comprising from about 70% to about 90% of one or more syrups, from about 3% to about 6% of one or more polyols, and from about 1% to about 6% one or more gelling agents and novel gel food compositions comprising such gel matrices and one or more comestible ingredients. The gel matrices and gel food compositions are soft, transparent, non-sticky, solid products that have an appealing and desirable appearance to animals, can be varied in content to retain the interest of animals consuming the composition, and can be varied in content to provide nutrients to animals.

Other and further objects, features, and advantages of the present invention will be readily apparent to those skilled in the art.

### DETAILED DESCRIPTION OF THE INVENTION

### Definitions

The term "food composition" means a product or composition that is intended for ingestion by an animal.

The term "animal" means any animal that could benefit from or enjoy the consumption of the products of the present invention, including human, avian, bovine, canine, equine, feline, hicrine, lupine, murine, ovine, or porcine animals.

The term "companion animal" means domesticated animals such as birds, cats, dogs, rabbits, guinea pigs, ferrets, hamsters, mice, gerbils, horses, cows, goats, sheep, donkeys, pigs, and the like.

The term "syrup" means a solution of concentrated sugar in water.

All percentages expressed herein are by weight of the total weight of the composition unless expressed otherwise.

All ratios expressed herein are on a weight:weight (w/w) basis unless expressed otherwise.

As used herein, ranges are used herein in shorthand, so as to avoid having to list and describe each and every value within the range. Any appropriate value within the range can be selected, where appropriate, as the upper value, lower value, or the terminus of the range.

As used herein, the singular form of a word includes the plural, and vice versa, unless the context clearly dictates otherwise. Thus, the references "a", "an", and "the" are generally inclusive of the plurals of the respective terms. For example, reference to "a syrup", "a method", or "a food" includes a plurality of such "syrups", "methods", or "foods." Similarly, the words "comprise", "comprises", and "comprising" are to be interpreted inclusively rather than exclusively. Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive.

The methods and compositions and other advances disclosed here are not limited to particular methodology, protocols, and reagents described herein because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

All patents, patent applications, publications, technical and/or scholarly articles, and other references cited or referred to herein are in their entirety incorporated herein by reference to the extent allowed by law. The discussion of those references is intended merely to summarize the assertions made therein. No admission is made that any such patents, patent applications, publications or references, or any portion thereof, are relevant, material, or prior art. The right to challenge the accuracy and pertinence of any assertion of such patents, patent applications, publications, and other references as relevant, material, or prior art is specifically reserved.

### The Invention

In one aspect, the invention provides gel food matrices. The gel matrices comprise from about 70% to about 90% of one or more syrups, from about 3% to about 6% of one or more polyols, and from about 1% to about 6% of one or more gelling agents. Typically, the matrices comprise from about 25% to about 1% water, preferably from about 3% to about 20% water, more preferably from about 5% to about 15% water. The gel matrices are suitable for consumption by an animal or useful for producing gel food compositions containing comestible ingredients. The gel matrices can be fed to an animal alone but preferably contain nutrients and/or other ingredients that benefit the health and wellness of the animal, *e.g.,* vitamins, minerals, medications, and the like as described herein.

The syrups can be any syrup useful for manufacturing the gel matrices. In preferred embodiments, the syrups comprise sugars selected from the group consisting of glucose, fructose, sucrose, lactose, galactose, mannose, maltose, or combinations thereof. In preferred embodiments, the syrup is glucose syrup.

The polyols can be any polyol useful for manufacturing the gel matrices. In preferred embodiments, the polyols are selected from the group consisting of glycerol, sorbitol, propylene glycol, butylene glycol, polydextrose, mannitol, maltitol, or combinations thereof. In preferred embodiments, the polyol is glycerol.

The gelling agents can be any gelling agent useful for manufacturing the gel matrices. In preferred embodiments, the gelling agents are selected from the group consisting of gums, starches, pectins, agars, gelatins, alginates, carrageenan, tamarind seeds, flour, animal gelatins, or combinations thereof. In preferred embodiments, the gelling agents are agar agar, locust bean gum, or combinations thereof.

In one embodiment, the syrup is glucose syrup, the polyol is glycerol, and the gelling agent is selected from the group consisting of agar agar, locust bean gum, or a combination thereof. In a preferred embodiment, the syrup is glucose syrup, the polyol is glycerol, and the gelling agent is a combination of agar agar and locust bean gum, preferably wherein the ratio of agar agar:locust bean gum is from about 1:8 to about 8:1, more preferably from about 1:6 to about 6:1, most preferably from about 1:4 to about 4:1.

In one embodiment, the gel matrices comprise from about 70% to about 90% of glucose syrup, from about 3% to about 6% of glycerol, and from about 2% to about 3% of a combination of agar agar and locust bean gum, wherein the ratio of agar agar:locust bean gum is from about 1:8 to about 8:1., more preferably from about 1:6 to about 6:1, most preferably from about 1:4 to about 4:1.

In another aspect, the invention provides gel food compositions. The gel food compositions comprise (1) from about 10% to about 90% of a gel matrix comprising from about 70% to about 90% of one or more syrups, from about 3% to about 6% of one or more polyols, and from about 1% to about 6% of one or more gelling agents and (2) from about 90% to about 10% of one or more comestible ingredients suitable for consumption by animals. The gel food compositions contain comestible ingredients in amounts required to meet the needs of an animal (*e.g.*, the health or nutrition requirements of the animal) or to appeal to the animal. Generally, the comestible ingredients comprise from about 10% to about 90% of the gel food composition, preferably from about 20% to about 80% more preferably from about 30% to 70%.

The comestible ingredients can be any comestible ingredient suitable for consumption by animals, preferably comestible ingredients that are beneficial to the animals. In various embodiments, the comestible ingredients are selected from the group consisting of meat, vegetables, fruits, food pellets, extruded foods, fish, fish derivatives, mollusks, crustaceans, vegetable extracts, eggs derivatives, or combinations thereof.

In one embodiment, the comestible ingredients are suitable for consumption by an avian. Such avians include, but are not limited to, chickens, ducks, swans, pigeons, gulls, and birds. Preferably, the avian is a bird and most preferably a domesticated bird such as a canary, budgie, or parrot. Such ingredients include, but are not limited to, seeds, candied fruits, vegetables, fruits, pellets, extruded foods, fresh fruits, fruit pulp, insects, cereals, or combinations thereof. In another embodiment, the comestible ingredients are suitable for consumption by a non-avian domesticated animal, *e.g.,* a companion animal such as a dog, cat, hamster, guinea pig, or rabbit.

For different animals, the size of the gel matrices and gel food compositions can be varied to produce convenient and comfortable products for consumption by animals. Considerations such as bite size, caloric requirements, animal activity, animal size, animal age, and the like can be used to determine the size and composition of the products. Similarly, the type and quantities of the comestible ingredients can be varied according to the health, caloric requirements, activity, size, breed, age, and preferences of the animals.

For different animals, the size of the comestible ingredients can be varied to produce convenient and comfortable products for consumption by animals. Considerations such as bite size, animal size, animal age, animal health, and the like can be used to determine the size of the ingredients. Typically, the comestible ingredients have a size of from about 1 to about 10 millimeters in average diameter or on the ingredients' largest edge.

For different animals, the particular ingredients and their amounts are chosen to ensure that they are compatible with and/or appealing to a particular animal. Such choices are within the scope of the skilled artisan. For example, particular ingredients may be counter-indicated for a particular animal or breed of animal based on the palatability, toxicity, or similar property for the ingredient.

The gel matrices and gel food compositions are typically formed into shapes that are easy to handle and feed to an animal. Any shape suitable for or appealing to an animal or its caregiver can be used, *e.g.,* hemispherical, round, block, apple shaped, heart shaped, star shaped, half-moon shaped, and the like. In preferred embodiments, the food compositions are hemispherical pills or pellets comprising the gel food composition containing one or more comestible ingredients.

The gel matrices and gel food compositions can easily be adapted for serving to birds or small animals that are fed inside a cage. A feeder specifically adapted for holding and serving the product is beneficial. Such feeder can be a plastic container with a cavity that holds the product while allowing a portion to be available for viewing and consumption by an animal.

In other embodiments, the gel matrices and gel food compositions further comprise one or more preservatives. The preservatives can be any preservative useful for manufacturing the food compositions. In preferred embodiments, the preservatives are selected from the group of sodium propionate, sorbic acid, citric acid, potassium sorbate, sodium benzoate, sodium nitrite, propionic acid, lactic acid, sodium bisulphite, sodium metabisulphite, or combinations thereof. Preferably the preservatives are sorbic acid, citric acid, sodium propionate, or combinations thereof.

In other embodiments, the gel matrices and gel food compositions are devoid of preservatives. When devoid of preservatives, the gel matrices and gel food compositions have an Aw of 0.75 or less, preferably 0.65 or less, most preferably 0.55 or less; a moisture content of 15% or less, preferably 12% or less, most preferably 10% or less; and a pH of from about 3 to 6, preferably 3.5 to 5, most preferably 3.5 to 4.5.

In various embodiments, the gel matrices and gel food compositions of the present invention comprise additional ingredients such as vitamins, minerals, amino acids, nucleic acids, fillers, palatability enhancers, binding agents, flavors, stabilizers, emulsifiers, sweeteners, colorants, buffers, salts, coatings, condiments, preservatives, prebiotics, probiotics, drugs, medicaments, medications, and the like known to skilled artisans. Non-limiting examples of supplementary minerals include calcium, phosphorous, potassium, sodium, iron, chloride, boron, copper, zinc, magnesium, manganese, iodine, selenium, and the like. Non-limiting examples of supplementary vitamins include vitamin A, any of the B vitamins, vitamin C, vitamin D, vitamin E, and vitamin K, including various salts, esters, or other derivatives of the foregoing. Additional dietary supplements may also be included, for example, any form of niacin, pantothenic acid, inulin, folic acid, biotin, amino acids, and the like, as well as salts and derivatives thereof. Stabilizers include substances that tend to increase the shelf life of the composition such as preservatives, synergists and sequestrants, packaging gases, emulsifiers, thickeners, gelling agents, and humectants. Examples of emulsifiers and/or thickening agents include gelatin, cellulose ethers, starch, starch esters, starch ethers, and modified starches. Selection of the ingredients and their amounts is known to skilled artisans. Specific amounts for each additional ingredient will depend on a variety of factors such as the ingredient included in the composition; the species of animal; the animal's age, body weight, general health, sex, and diet; the animal's consumption rate; the purpose for which the food compositions is being administered to the animal; and the like. Therefore, the component and ingredient amounts may vary widely and may deviate from the preferred proportions described herein.

In other embodiments, the gel matrices and gel food compositions are formulated to provide "complete and balanced" nutrition for an animal, preferably a companion animal, according to standards established by the Association of American Feed Control Officials (AAFCO). In still other embodiments, the gel matrices and gel food compositions are formulated as a snack, treat, toy, chew, or similar composition.

For example, in one embodiment suitable for canary birds, a gel food composition comprises about 0.3% of a mixture of preservatives comprising sodium propionate, sorbic acid, citric acid); about 0.07% colorant (optional); about 0.005% vitamins; about 52% glucose syrup; about 1.6% agar agar, about 0.2% locust bean gum, about 2.9% glycerol, about 0.09% aroma, about 5.6% candied fruit, about 34% seeds, and about 4% water. In another embodiment suitable for small mammals, a gel food composition comprises about 0.3% of a mixture of preservatives comprising sodium propionate, sorbic acid, citric acid); about 0.06% colorant (optional), about 0.004% vitamins, about 49% glucose syrup, about 1.5% agar agar, about 0.3% locust bean gum, about 2.8 % glycerol, about 0.08% aroma, about 5.3% candied fruit, about 37% seeds, and about 3.7% water. The food compositions can be adapted for serving to animals such as birds and small mammals inside a pen or cage. When adapted, the compositions are shaped and sized to fit a feeder specifically adapted for serving the food composition. The feeder is typically a plastic device with a cavity adapted to accommodate the food composition and display on aspect of the composition, typically the head of a hemispherical pill.

In various embodiments, the gel food matrices (and gel food matrices in the gel food compositions) comprise one or more syrups in amounts of from about 70% to about 90%, preferably from about 75% to about 85%. In various embodiments, the gel food matrices comprise one or more polyols in amounts of from about 3% to about 6%, preferably from about from about 3.5% to about 5.5%, most preferably from about 4% to about 5%. Similarly, in various embodiments, the gel food matrices comprise one or more gelling agents in amounts of from about 1% to about 6%, preferably from about 1.5% to about 5%, most preferably from about 2% to about 3%.

In various embodiments, the gel food matrices comprise syrups in amounts of about 70%, 75%, 80%, 85%, or 90%. In various embodiments, the gel food matrices comprise polyols in amounts of about 3%, 3.5%, 4%, 4.5%, 5%, 5.5%, or 6% and gelling agents in amounts of about 1%, 1.5%, 2%, 2.5%, 3%, 3.5%, 4%, 4.5%, 5%, 5.5%, or 6%.

The invention is based upon the discovery that a unique combination of syrups, polyols, and gelling agents can provide soft, transparent, non-sticky, solid gel matrix that alone or in combination with comestible ingredients has an appealing and desirable appearance, can be varied in content to retain the interest of an animal consuming the composition, and can be varied in content to provide supplemental or complete nutrition for an animal. The invention is useful for enriching and varying the diet of animals.

In another aspect, the invention provides methods for making gel matrices. The methods comprise mixing one or more syrups and one or more gelling agents at a temperature of from about 18 to 30°C for from about 0.5 to about 10 minutes to produce a homogenous mixture; adding one or more polyols to the homogenous mixture and stirring for about 0.5 to about 5 minutes to produce a homogenous pre-gel; and heating the homogenous pre-gel to a temperature of from about 80 to about 160°C for from about 10 to about 60 minutes to produce a soft, transparent, non-sticky, solid gel matrix comprising from about 70% to about 90% syrups, from about 3% to about 6% polyols, and from about 1% to about 6% gelling agents. The gel matrices are suitable for feeding to animals or suitable for containing additional ingredients such as nutrients and additional ingredients as described herein.

In another aspect, the invention provides methods for making gel food compositions. The methods comprise mixing one or more syrups and one or more gelling agents at a temperature of from about 18 to 30°C for from about 0.5 to about 10 minutes to produce a homogenous mixture; adding one or more polyols to the homogenous mixture and stirring for about 0.5 to about 5 minutes to produce a homogenous pre-gel; adding one or more comestible ingredients to the homogenous pre-gel and stirring to produce a mixture of the pre-gel and the comestible ingredients; and heating the mixture of pre-gel and the comestible ingredients to a temperature of from about 80 to about 160°C for from about 10 to about 60 minutes to produce a gel food composition comprising (1) from about 90% to about 10% of a soft, transparent, non-sticky, solid gel matrix comprising from about 70% to about 90% of one or more syrups, from about 3% to about 6% of one or more polyols, and from about 1% to about 6% of one or more gelling agents and (2) from about 90% to about 10% of one or more comestible ingredients.

The gel food compositions are suitable for feeding to animals.

When making the gel matrix or the gel food composition, the amount of syrups, gelling agents, polyols, comestible ingredients, and any other components (*e*.*g*., water, colorants, flavors, vitamins, minerals, etc.) are chosen so that the final product contains the ingredients in the required amounts according to the invention.

In another aspect, the invention provides a means for communicating information about or instructions for one or more of (1) instructions for feeding the gel products of the present invention to an animal; (2) contact information for consumers or caregivers to use if they have a question about the products or their use; and (3) nutritional information about the gel products. Useful instructions can include feeding amounts and frequency. The communication means is useful for instructing on the benefits of using the present invention and communicating the approved or preferred methods for feeding the products to an animal. The means comprises one or more of a physical or electronic document, digital storage media, optical storage media, audio presentation, audiovisual display, or visual display containing the information or instructions. Preferably, the means is selected from the group consisting of a displayed website, a visual display kiosk, a brochure, a product label, a package insert, an advertisement, a handout, a public announcement, an audiotape, a videotape, a DVD, a CD-ROM, a computer readable chip, a computer readable card, a computer readable disk, a USB device, a FireWire device, a computer memory, and any combination thereof.

In another aspect, the present invention provides a package comprising gel matrices and/or gel food compositions of the present invention and a label affixed to the package containing a word or words, picture, design, acronym, slogan, phrase, or other device, or combination thereof that indicates that the contents of the package contains a gel product with beneficial properties relating to one or more of the appearance, transparency, softness, stickiness, contents, nutritional benefits, and the like of the composition. Typically, such device comprises the words "delicious and nutritional snack", "nutritious treat", or an equivalent expression printed on the package. Any package or packaging material suitable for containing the product is useful in the invention, *e*.*g*., bag, box, bottle, can, pouch, and the like manufactured from paper, plastic, foil, metal, and the like. In a preferred embodiment, the package contains a gel product adapted for a particular animal such as an avian, canine, or feline, as appropriate for the label, preferably an avian product suitable for birds such as canaries, budgies, or parakeets or a companion animal product for dogs or cats.

### EXAMPLES

The invention can be further illustrated by the following examples, although it will be understood that these examples are included merely for purposes of illustration and are not intended to limit the scope of the invention unless otherwise specifically indicated.

### Example 1

500 grams of a gel matrix was produced using the ingredients and amounts shown in Table 1. The glucose syrup at room temperature (18 to 30°C) was metered into a high shear mixer. A pre-weighed blend of the sorbic acid, vitamins, agar agar, and locust bean gum was added to the mixer and blended for one minute at a mixer speed of 90 rpm followed by three minutes at speed of 400 rpm. The citric acid and sodium propionate was dissolved in the water and the solution was added to the other ingredients already in the mixer. Glycerol was also added at this time. This mixture was then blended at 400 rpm for a further two minutes. The resulting gel matrix had a viscosity (1) such that it could be easily poured into molds or other containers and heated to form a comestible gel matrix and (2) suitable for mixing with comestible ingredients before being poured and heated to form a comestible gel food composition.

**Table 1**

| Ingredient | % |
|---|---|
| Glucose Syrup (77% solids) | 85.05 |
| Water | 6.42 |
| Locust Bean Gum | 0.38 |
| Agar Agar | 2.71 |
| Glycerol | 4.81 |
| Sodium propionate | 0.15 |
| Citric Acid | 0.19 |
| Sorbic Acid | 0.18 |
| Vitamins | 0.008 |
| Sunset Yellow | 0.102 |

### Example 2

Comestible ingredients suitable for feeding avians were incorporated into a gel matrix as described below. The avian formulation is shown in Table 2.

**Table 2**

| Ingredient | % |
|---|---|
| Gel Matrix | 60.7 |
| Seeds | 33.6 |
| Candied Fruits | 5.6 |
| Aroma Enhancer | 0.1 |

The seeds, candied fruits, and aroma enhancer were added to a gel matrix prepared according the method of Example 1 while it was in the mixer and blended for 1 minute at 90 rpm. This blended mixture was then poured into polypropylene trays suitable for containing 6 to 8 grams per tray. The trays were then transferred to an oven and heated at 95°C for 35 minutes. As a result, the gel matrix with the comestible ingredients was transformed into a soft, transparent, non-sticky, solid gel food composition. The trays with the product were cooled to room temperature. The final product had a moisture content of less than 15% and water activity of less than 0.75. The pH was about 4.5. The product was very palatable and readily consumed by avians.

### Example 3

A gel matrix was made according to the methods of Example 1 except that no color was added. Comestible ingredients suitable for feeding small mammals were incorporated into the gel matrix using the methods described in Example 2. The formulation is shown in Table 3.

**Table 3**

| Ingredient | % |
|---|---|
| Gel Matrix | 57.3 |
| Seeds | 37.3 |
| Candied Fruits | 5.3 |
| Aroma Enhancer | 0.1 |

Two products were made. One approximately 24 gram product suitable for feeding hamsters and one approximately 30 gram product suitable for feeding dwarf rabbits. The resulting products were soft, transparent, non-sticky, solid gel food compositions. The products had a moisture content less than 15% and water activity less than 0.75. The pH was about 4.5. The products were very palatable and readily consumed by hamsters and dwarf rabbits, respectively.

In the specification, there have been disclosed typical preferred embodiments of the invention. Although specific terms are employed, they are used in a generic and descriptive sense only and not for purposes of limitation. The scope of the invention is set forth in the claims. Obviously many modifications and variations of the invention are possible in light of the above teachings. It is therefore to be understood that within the scope of the appended claims, the invention may be practiced otherwise than as specifically described.

## Claims

1. A composition comprising a gel food matrix comprising from about 70% to about 90% of one or more syrups, from about 3% to about 6% of one or more polyols, and from about 1% to about 6% of one or more gelling agents.

2. A gel food composition comprising (1) from about 10% to about 90% of a gel matrix comprising from about 70% to about 90% of one or more syrups, from about 3% to about 6% of one or more polyols, and from about 1% to about 6% of one or more gelling agents and (2) from about 90% to about 10% of one or more comestible ingredients suitable for consumption by animals.

3. The composition of any preceding claim wherein the syrups are selected from the group consisting of glucose, fructose, sucrose, lactose, galactose, mannose, maltose, or combinations thereof.

4. The composition of any preceding claim wherein the polyols are selected from the group consisting of glycerol, sorbitol, propylene glycol, butylene glycol, polydextrose, mannitol, maltitol, or combinations thereof.

5. The composition of any preceding claim wherein the gelling agents are selected from (a) the group consisting of gums, starches, pectins, agars, gelatins, alginates, carrageenan, tamarind seeds, flour, animal gelatins, or combinations thereof; or (b) the group consisting of agar agar, locust bean gum, or combinations thereof.

6. The composition of any preceding claim wherein the syrup is glucose syrup, the polyol is glycerol, and the gelling agent is selected from the group consisting of agar agar, locust bean gum, or a combination thereof.

7. The composition of any preceding claim wherein the gelling agent is a mixture of agar agar and locust bean gum, wherein the ratio agar agar to locust bean gum is from about 1:8 to about 8:1.

8. The composition of any preceding claim further comprising one or more preservatives; optionally wherein the preservatives are selected from the group consisting of sodium propionate, sorbic acid, citric acid, potassium sorbate, sodium benzoate, sodium nitrite, propionic acid, lactic acid, sodium bisulphite, sodium metabisulphite, or combinations thereof.

9. The matrix of claim 1 wherein the matrix is devoid of preservatives; optionally wherein the Aw is 0.75 or less.

10. The composition of any one of claims 2 to 9 wherein the comestible ingredients are suitable for consumption by an avian; optionally wherein the avian is a bird; optionally wherein the bird is a domesticated bird; optionally wherein the domesticated bird is a canary, budgie, or parakeet.

11. The composition of any one of claims 2 to 10 wherein the comestible ingredients are selected from the group consisting of seeds, candied fruits, vegetables, fruits, pellets, extruded foods, fresh fruits, fruit pulp, insects, cereals, or combinations thereof.

12. The composition of any one of claims 2 to 9 wherein the animal is a non-avian domesticated animal; optionally wherein the domesticated animal is a companion animal; optionally wherein the companion animal is (a) a dog or cat; or (b) a hamster, guinea pig, or rabbit.

13. The composition of any one of claims 2 to 12 wherein the comestible ingredients are selected from the group consisting of meats, vegetables, fruits, food pellets, extruded foods, fresh fruits, fruit pulp, insects, cereals, or combinations thereof.

14. A method for making a gel matrix comprising:
mixing one or more syrups and one or more gelling agents at a temperature of from about 18 to 30°C for from about 0.5 to about 10 minutes to produce a homogenous mixture;
adding one or more polyols to the homogenous mixture and stirring for about 0.5 to about 5 minutes to produce a homogenous pre-gel; and
heating the homogenous pre-gel to a temperature of from about 80 to about 160°C for from about 10 to about 60 minutes to produce a soft, transparent, non-sticky, solid gel matrix comprising from about 70% to about 90% syrups, from about 3% to about 6% polyols, and from about 1% to about 6% gelling agents.

15. A method for making a gel food composition comprising:
mixing one or more syrups and one or more gelling agents at a temperature of from about 18 to 30°C for from about 0.5 to about 10 minutes to produce a homogenous mixture;
adding one or more polyols to the homogenous mixture and stirring for about 0.5 to about 5 minutes to produce a homogenous pre-gel;
adding one or more comestible ingredients to the homogenous pre-gel and stirring to produce a mixture of the pre-gel and the comestible ingredients; and
heating the mixture of pre-gel and the comestible ingredients to a temperature of from about 80 to about 160°C for from about 10 to about 60 minutes to produce a gel food composition comprising (1) from about 90% to about 10% of a soft, transparent, non-sticky, solid gel matrix comprising from about 70% to about 90% of one or more syrups, from about 3% to about 6% of one or more polyols, and from about 1% to about 6% of one or more gelling agents and (2) from about 90% to about 10% of one or more comestible ingredients.

16. A means for communicating information about or instructions for one or more of (1) instructions for feeding the composition of any one of claims 1 to 13 to an animal, (2) instructions for feeding the gel food composition of any one of claims 2 to 13 to an animal; (3) contact information for consumers or caregivers to use if they have a question about the composition of any one of claims 1 to 13 or its use, (4) contact information for consumers or caregivers to use if they have a question about the gel food composition of any one of claims 2 to 13 or its use; (5) nutritional information about the composition of any one of claims 1 to 13, or (6) nutritional information about the gel food composition of any one of claims 2 to 13, the means comprising one or more of a physical or electronic document, digital storage media, optical storage media, audio presentation, audiovisual display, or visual display containing the information or instructions; optionally wherein the means is selected from the group consisting of a displayed website, a visual display kiosk, a brochure, a product label, a package insert, an advertisement, a handout, a public announcement, an audiotape, a videotape, a DVD, a CD-ROM, a computer readable chip, a computer readable card, a computer readable disk, a USB device, a FireWire device, a computer memory, and any combination thereof.

17. A package comprising a composition of any one of claims 1 to 13 and a label affixed to the package containing a word or words, picture, design, acronym, slogan, phrase, or other device, or combination thereof that indicates that the contents of the package contains a gel food matrix or gel food composition of any one of claims 1 to 13 with beneficial properties; optionally wherein the beneficial properties are one or more of appearance, transparency, softness, stickiness, contents, and nutritional benefits.
